# EUROPÄISCHE PATENTANMELDUNG

(11) **EP 1 396 830 A2**
(43) Veröffentlichungstag der Anmeldung: **10.03.2004**
(21) Anmeldenummer: 03090251.4
(22) Anmeldetag: 06.08.2003
(51) Int. Cl.: G07F 19/00, G06F 17/60

(54) **e-Payment: Loyalty Programme**

(30) Priorität: 23.08.2002 DE 10238795
(71) Anmelder: SIEMENS AKTIENGESELLSCHAFT, 80333 München (DE)
(72) Erfinder: Lilge, Manfred, 14195 Berlin (DE); Ryll, Thomas, 10823 Berlin (DE)

(57) **Zusammenfassung**

Die Erfindung betrifft ein Verfahren zum Transferieren von Geldbeträgen und Bonuspunkten zwischen Kontospeichern eines Kontoführungssystems, bei dem von dem Kontoführungssystem auf einen Empfang einer Zahlaufforderung hin ein von einem Händler geforderter Geldbetrag von einem ersten Kontospeicher zum Speichern von Informationen über Geldmittel eines Kunden zu einem zweiten Kontospeicher zum Speichern von Informationen über Geldmittel eines Händlers transferiert wird, und eine Anzahl Bonuspunkte von einem vierten Kontospeicher zum Speichern von Informationen über Bonuspunkte des Händlers zu einem dritten Kontospeicher zum Speichern von Informationen über Bonuspunkte des Kunden transferiert wird. Weiterhin betrifft die Erfindung ein Kontoführungssystem.

## Beschreibung

Die Erfindung betrifft ein Kontoführungssystem und Verfahren zum Transferieren von Geldbeträgen und Bonuspunkten zwischen Kontospeichern eines Kontoführungssystems.

Im Allgemeinen sind an einem Kaufvorgang drei verschiedene Teilnehmergruppen (Rollen) beteiligt:

Ein Händler (Merchant) ist ein Anbieter einer Dienstleistung oder eines Produktes, für welche er ein Entgelt verlangt.

Ein Kunde (Consumer) ist ein Käufer einer angebotenen Dienstleistung und muss dafür bezahlen.

Ein zahlungsdienstleister (Payment Service Provider, PSP) wickelt Bezahlungen zwischen Händlern und Kunden ab.

In der klassischen Telekommunikationswelt tritt der Netzwerkbetreiber (Network Operator) sowohl als Händler als auch als Zahlungsdienstleister auf. Er bietet Telefoniedienste seinen Kunden (=Consumern) an und rechnet diese über seine existierenden Billing Systeme (Postpaid oder Prepaid) ab.

Mit der Öffnung der Telekommunikationsnetze (z.B. unter Nutzung der Parlay/OSA-Technik) wie auch innerhalb öffentlicher Datennetze (z.B. Internet) treten auch Dritte als Merchants auf, die eigene Dienstleistungen anbieten (z.B. Content Provider, Online Shops); diese Dritten besitzen jedoch in der Regel keine eigenen Abrechnungssysteme.

Das Einführen von "Loyalty Programmen", bei denen ein Endkunde Bonuspunkte eines Merchants/einer Gruppe von Merchants sammeln kann, ist in der realen Welt und auch im elektronischen Bezahlvorgang etabliert und findet sich in verschiedensten Ausführungen. Als Beispiele seien genannt:
- Loyalty-Programm eines Merchants: Kundenkarte des Handelsunternehmens "Karstadt"
- Loyalty-Programm eines übergeordneten Anbieters: "Payback" der "Loyalty Partner Gesellschaft für Kundenbindungssysteme mbH in München"
- Loyalty-Programm eines PSP: "UBS Key Club"
- Misch-Kombinationen: "Lufthansa miles&more", wobei Lufthansa einmal als Merchant auftritt und Flugleistungen verkauft, aber auch als übergeordneter Partner auftritt, der Punkte eines anderen Merchants (z.B. der Hotelkette "Holiday Inn") in sein Programm einbindet.

Das Verteilen von Punkten in einem Loyalty-Programm erfolgt in der Regel nach einer erfolgten Transaktion (von Ausnahmen wie "Begrüßungspunkten" einmal abgesehen), also nachdem Merchant und Consumer einen Geschäftsvorfall hatten.

Als Beispiele dafür seien genannt:
1) Die Punkte für das Loyalty Programm werden direkt aus der Anzahl der Transaktionen zwischen Consumer und Merchant/Merchant Gruppe berechnet.
2) Die Punkte für das Loyalty Programm hängen von der Höhe der Transaktion ab, d.h. es liegt ein prozentualer Zusammenhang vor. Auch ein Stufenkonzept, bei dem erst nach Erreichen von Schwellwerten ein höherer Prozentsatz zum Einsatz kommt, ist anwendbar.

Alle diese Programme weisen den Nachteil / das Problem auf, dass die Berechnung von Loyalty-Punkten (Bonuspunkten) nicht in Echtzeit geschieht und die erworbenen Punkte damit nicht direkt zur weiteren Verwendung zur Verfügung stehen. Die Berechnung wird im "Postprocessing" vorgenommen.

Die Erfindung sieht hier eine Verbesserung vor und schlägt erfindungsgemäß folgendes Verfahren und folgendes Kontoführungssystem vor:
Ein Kontoführungssystem mit einem ersten Kontospeicher zum Speichern von Informationen über Geldmittel eines Kunden, einem zweiten Kontospeicher zum Speichern von Informationen über Geldmittel eines Händlers, einem dritten Kontospeicher zum Speichern von Informationen über Bonuspunkte des Kunden, einem vierten Kontospeicher zum Speichern von Informationen über Bonuspunkte des Händlers, und einer Steuereinheit, die bei Auftreten eines Bezahlvorganges ein Transferieren eines Geldbetrages von dem ersten Kontospeicher zu dem zweiten Kontospeicher und ein Transferieren einer Anzahl Bonuspunkte von dem vierten Kontospeicher zu dem dritten Kontospeicher veranlasst.
Ein Verfahren zum Transferieren von Geldbeträgen und Bonuspunkten zwischen Kontospeichern eines Kontoführungssystems, bei dem von dem Kontoführungssystem auf einen Empfang einer Zahlaufforderung hin ein von einem Händler geforderter Geldbetrag von einem ersten Kontospeicher zum Speichern von Informationen über Geldmittel eines Kunden zu einem zweiten Kontospeicher zum Speichern von Informationen über Geldmittel eines Händlers transferiert wird, und eine Anzahl Bonuspunkte von einem vierten Kontospeicher zum Speichern von Informationen über Bonuspunkte des Händlers zu einem dritten Kontospeicher zum Speichern von Informationen über Bonuspunkte des Kunden transferiert wird.

Vorteilhafte Ausgestaltungen sind in den Unteransprüchen angegeben.

"Loyalty Programme" werden in Echtzeit durchgeführt. Die benötigten Berechnungen werden in Echtzeit, also mit der Bezahlung des Consumers, vorgenommen. Die beteiligten Parteien können die so berechneten Bonuspunkte (Loyalty Points, Loyalty Punkte) direkt und nicht erst nach späteren Berechnungen durch Postprocessing-Systeme weiterverwenden.

Das Einführen von "Loyalty Programmen" wird mit Hilfe einer e-Payment basierten Lösung möglich. Die Berechnungen werden in Echtzeit und damit ohne für die beteiligten Parteien bemerkbare Verzögerungen durchgeführt.

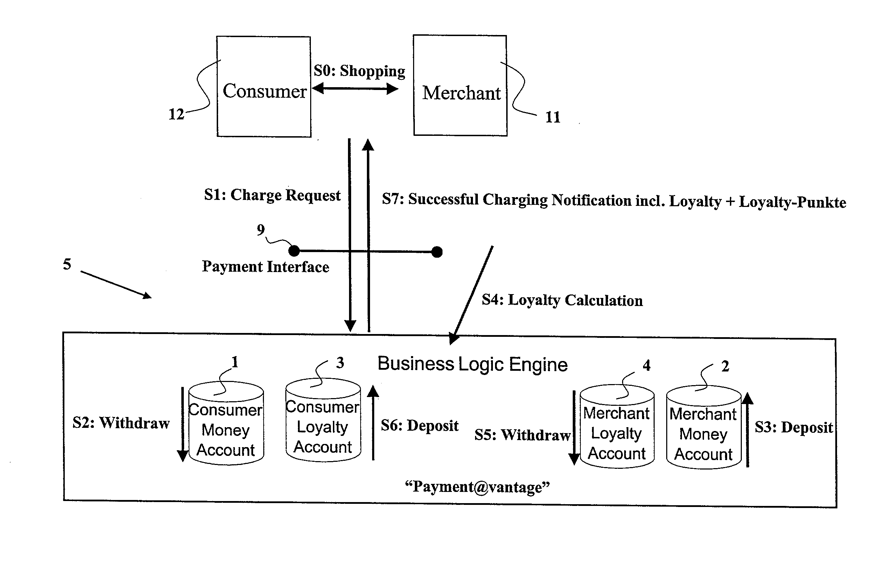

Mittels der einzigen Figur wird die Erfindung näher erläutert. Die Figur zeigt ein Ausführungsbeispiel für das erfindungsgemäße Kontoführungssystem und das erfindungsgemäße Verfahren zum Transferieren von Geldbeträgen und Bonuspunkten zwischen Kontospeichern eines Kontoführungssystems.

Die Figur zeigt ein Real-Time-Kontoführungssystem 5 ("Payment System", "Payment@vantage"), dass sowohl Konten für Kunden (Consumer), Händler (Merchants) und Zahlungsdienstleister (PSPs) verwaltet. Dieses Payment System wird vom Zahlungsdienstleister (PSP) betrieben. Im einzelnen weist das Kontoführungssystem 5 einen ersten Kontospeicher 1 (Consumer Money Account) zum Speichern von Informationen über Geldmittel eines Kunden, einen zweiten Kontospeicher 2 (Merchant Money Account) zum Speichern von Informationen über Geldmittel eines Händlers, einen dritten Kontospeicher 3 (Consumer Loyalty Account) zum Speichern von Informationen über Bonuspunkte des Kunden und einen vierten Kontospeicher 4 (Merchant Loyalty Account) zum Speichern von Informationen über Bonuspunkte des Händlers auf.

Das Kontoführungssystem 5 (Payment System) weist ein "Payment Interface" 9 (Zahlungsschnittstelle) auf, über das Zahlaufforderungen an das Payment System gerichtet werden (Schritt S1: Charge Request). In einer solchen Zahlaufforderung sind sowohl Merchant 11 wie auch Consumer 12 identifiziert, welche an einem Kaufvorgang (Schritt S0: Shopping) beteiligt sind. Dieses "Payment Interface" steht direkt oder indirekt auch Teilnehmern einer "Open Service Architecture" zur Verfügung.

Der Bezahlvorgang wird vom Payment System intern so umgesetzt, dass der vom Merchant 11 eingeforderte Betrag vom Consumer-Konto 1 zum Merchant-Konto 2 transferiert wird (Schritt S2: Withdraw = Abheben, Schritt S3: Deposit = Einzahlen). Als Folge dessen kann direkt der zu veranschlagende Betrag an Punkten des "Loyalty Programmes" (Bonuspunkten) berechnet (Schritt S4: Loyalty Calculation) werden. Die berechneten Punkte werden dann von dem speziellen Konto 4 des Merchants/der Merchant-Gruppe auf das spezielle Loyalty-Programm-Konto 3 des Consumers transferiert (Schritt S5: Withdraw, Schritt S6: Deposit) und stehen zur weiteren Verwendung zur Verfügung.

Auch innerhalb eines Bezahlvorganges ist der Einsatz von Punkten des Loyalty-Programms möglich. Diese Punkte können als alternative Währung eingesetzt werden; der Preis eines Produktes/ einer Dienstleistung setzt sich dann aus einer Kombination von einem Betrag in einer realen Währung und Punkten zusammen. Punkte des Loyalty-Programms können auch die einzige Währung beim Bezahlen sein, also direkt in ein Produkt/Dienstleistung umgesetzt werden und einen Geschäftsvorfall abschließen.

## Patentansprüche

1. Kontoführungssystem (5) mit
einem ersten Kontospeicher (1) zum Speichern von Informationen über Geldmittel eines Kunden (12),
einem zweiten Kontospeicher (2) zum Speichern von Informationen über Geldmittel eines Händlers (11),
einem dritten Kontospeicher (3) zum Speichern von Informationen über Bonuspunkte des Kunden (12),
einem vierten Kontospeicher (4) zum Speichern von Informationen über Bonuspunkte des Händlers (11), und
einer Steuereinheit, die bei Auftreten (S1) eines Bezahlvorganges ein Transferieren (S2, S3) eines Geldbetrages von dem ersten Kontospeicher (1) zu dem zweiten Kontospeicher (2) und ein Transferieren (S5, S6) einer Anzahl Bonuspunkte von dem vierten Kontospeicher (4) zu dem dritten Kontospeicher (3) veranlasst.

2. Kontoführungssystem nach Anspruch 1,
**gekennzeichnet durch**
ein Zahlungsinterface (9), welches zum Übertragen von Zahlaufforderungen (S1 zu dem Kontoführungssystem (5) ausgebildet ist, wobei in den Zahlaufforderungen der Händler (11) und der Kunde (12) identifiziert sind.

3. Kontoführungssystem nach Anspruch 2,
**dadurch gekennzeichnet, dass**
das Zahlungsinterface (9) Teilnehmern einer Open Service Architektur zugänglich ist.

4. Verfahren zum Transferieren (S2, S3, S5, S6) von Geldbeträgen und Bonuspunkten zwischen Kontospeichern (1, 2, 3, 4) eines Kontoführungssystems (5), bei dem
von dem Kontoführungssystem auf einen Empfang einer Zahlaufforderung (S1) hin ein von einem Händler (11) geforderter Geldbetrag von einem ersten Kontospeicher (1) zum Speichern von Informationen über Geldmittel eines Kunden (12) zu einem zweiten Kontospeicher (2) zum Speichern von Informationen über Geldmittel eines Händlers (11) transferiert (S2, S3) wird,
und eine Anzahl Bonuspunkte von einem vierten Kontospeicher (4) zum Speichern von Informationen über Bonuspunkte des Händlers (11) zu einem dritten Kontospeicher (3) zum Speichern von Informationen über Bonuspunkte des Kunden (12) transferiert (S5, S6) wird.

5. Verfahren nach Anspruch 4,
**dadurch gekennzeichnet, dass**
die Anzahl an Bonuspunkten in Echtzeit berechnet (S4) wird.

6. Verfahren nach Anspruch 4 oder 5,
**dadurch gekennzeichnet, dass**
die Bonuspunkte als alternative Währung innerhalb eines Bezahlvorganges eingesetzt werden.

7. Verfahren nach einem der Ansprüche 4 bis 6,
**dadurch gekennzeichnet, dass**
die Anzahl an Bonuspunkten transferiert (S5, S6) wird nach einer erfolgten Transaktion zwischen dem Kunden und dem Händler.

8. Verfahren nach einem der Ansprüche 4 bis 7,
**dadurch gekennzeichnet, dass**
die Anzahl an Bonuspunkten berechnet (S4) wird aus der Anzahl an Transaktionen zwischen dem Kunden und dem Händler.

9. Verfahren nach einem der Ansprüche 4 bis 8,
**dadurch gekennzeichnet, dass**
die Anzahl an Bonuspunkten berechnet (S4) wird aus der Höhe von Transaktionen zwischen dem Kunden und dem Händler.
